**Europäisches Patentamt**

**European Patent Office**

**Office européen des brevets**

(19)

(11) Veröffentlichungsnummer : **0 317 604 B1**

(12)                    **EUROPÄISCHE PATENTSCHRIFT**

(45) Veröffentlichungstag der Patentschrift :
**26.08.92 Patentblatt 92/35**

(51) Int. Cl.⁵ : **G06K 1/12,** G06K 19/06

(21) Anmeldenummer : **88904927.6**

(22) Anmeldetag : **14.06.88**

(86) Internationale Anmeldenummer :
**PCT/DE88/00357**

(87) Internationale Veröffentlichungsnummer :
**WO 88/10475 29.12.88 Gazette 88/28**

(54) **VERFAHREN ZUR KENNZEICHNUNG VON HALBLEITEROBERFLÄCHEN.**

(30) Priorität : **15.06.87 DE 3719983**

(43) Veröffentlichungstag der Anmeldung :
**31.05.89 Patentblatt 89/22**

(45) Bekanntmachung des Hinweises auf die
Patenterteilung :
**26.08.92 Patentblatt 92/35**

(84) Benannte Vertragsstaaten :
**CH FR GB IT LI NL**

(56) Entgegenhaltungen :
**EP-A- 0 134 469**

(56) Entgegenhaltungen :
**EP-A- 0 157 546**
**FR-A- 2 184 778**
**US-A- 3 474 457**
**US-A- 4 214 249**
**US-A- 4 585 931**

(73) Patentinhaber : **Leuze electronic GmbH + Co.**
**In der Braike 1**
**W-7311 Owen-Teck (DE)**

(72) Erfinder : **SPRATTE, Hans-Hermann**
**Villa-Stra e 30**
**W-7312 Kirchheim-Teck (DE)**
Erfinder : **REINDL, Werner**
**Kirchfeld-Stra e 6**
**W-8025 Unterhaching (DE)**

EP 0 317 604 B1

**Beschreibung**

Die Erfindung betrifft ein Verfahren zur Kennzeichnung von Halbleiteroberflächen nach dem Oberbegriff des Anspruchs 1.

Bei einem derartigen aus der US-A-4 585 931 bekannten Verfahren wird auf der Oberfläche eines Wafers durch Laserbeschuß eine Strichkodierung erzeugt, deren einzelne Striche eine Tiefe von etwa 8 bis 10 μm aufweisen. Bei der auch als Barcode bezeichneten Strichkodierung handelt es sich um eine Kombination aus schmalen Strichen, schmalen Lücken, breiten Strichen und breiten Lücken.

Bei einem aus der EP-A-0 134 469 bekannten Verfahren zur Kennzeichnung von Halbeiteroberflächen werden Buchstaben, Ziffern und andere Symbole durch im Abstand zueinander angeordnete kreisförmige Schmelzpunkte gebildet, die beim Laserbeschuß durch Aufschmelzen und partielles Verdampfen des Halbleitermaterials erzeugt werden. Die kreisförmigen Schmelzpunkte weisen Tiefen zwischen 1 und 5 μm und Durchmesser zwischen 70 und 75 μm auf.

Das maschinelle Lesen von OCR-Klarschrift (OCR = Opitcal Character Recognition) erfordert im Vergleich zu einer Strichkodierung aufwendige Einrichtungen. Außerdem ist das Verhältnis von fehlerhaften Dekodierergebnissen zu korrekten Dekodierergebnissen bei einer Strichkodierung wesentlich kleiner als bei Klarschrift. So ist beispielsweise die typische Substitions fehlerrate bei dem bekannten Barcode "Code 39" $1:3 \times 10^6$, bei Klarschrift hingegen $1:10^4$. Schließlich ist der für Klarschrift erforderliche Platzbedarf im Hinblick auf die Zeichenhöhe und die Zeichendichte verhältnismäßig groß. Die beispielsweise nach dem aus der EP-A-0 134 469 bekannten Verfahren mittels Laser erstellte Klarschrift kann in sogenannter Softmark-Beschriftung erstellt werden. Unter einer solchen Softmark-Beschriftung ist ein Anschmelzen bzw. Umschmelzen der Oberfläche der Halbleiterscheibe in geringer Tiefe von ca. 1 μm zu verstehen, bei dem in nächster Umgebung der Beschriftung weder Materialspritzer erzeugt werden, noch Kristalldefekte entstehen. Vorteilhaft ist die Softmark-Beschriftung von Halbleiterscheiben insbesondere deshalb, weil diese Beschriftungsmethode zu einem beliebigen Zeitpunkt während der laufenden Chipfertigung angewandt werden kann.

Nach dem Stand der Technik wäre die Laserbeschriftung von Halbleiteroberflächen mit Strichkodierungen in Softmark-Technik zwar beherrschbar, jedoch nicht deren maschinelle Lesbarkeit mit handelsüblichen Barcode-Lesegeräten. Der Grund dafür ist, daß sich die Lesesignale bei der Detektion von Barcodesymbolen nicht mit der geforderten Sicherheit unterscheiden. Die Oberflächenreflexion und der Streulichtanteil von breiten und schmalen Strichen sind bei Strichkodierungen in Softmark-Technik nicht reproduzierbar. Eine den Barcode-Anforderungen gerechte Lesesicherheit von beispielsweise 0,003 Promille bei dem bekannten "Code 39" ist bei der Laserschriftung in Softmark-Technik nicht gewährleistet.

Demgegenüber ist die beispielsweise aus der US-A-4 585 931 bekannte Hardmark-Beschriftung von Halbleiteroberflächen mit Strichkodierungen mit optischen Abtasteinrichtungen dekodierbar. Der Laserbeschuß erzeugt hier eine Tiefenbeschriftung mit breiten Gräben zur Darstellung der einzelnen Striche. Die Kennzeichnung von Halbleiteroberflächen durch Laserbeschuß in Hard mark-Technik ist aber wegen möglicher Kristallversetzungen und/oder Verschmutzungen der Oberfläche der Halbleiterscheiben nur beim Scheibenhersteller anwendbar. Der Scheibenhersteller hat nämlich noch die Möglichkeit, nach dem Aufbringen der Strichkodierung die Defekte durch mechanische oder chemische Nachbearbeitung zu beseitigen. Dies ist aber beim Chiphersteller nicht möglich. Außerdem ist bei der Kennzeichnung durch Hardmark-Beschriftung der erforderliche Platzbedarf im Hinblick auf Zeichenhöhe und Zeichendichte verhältnismäßig groß.

Durch die EP - A 0 157 546 ist ein Verfahren zur Kennzeichnung von Oberflächen mit einer durch Laserbeschuß erzeugten Punktkodierung bekannt, wobei sich die Punkte überlappen können. Die mit diesem Verfahren erzielbaren Punktdurchmesser liegen dabei in der Größenordnung von 0,010 Zoll, so daß eine hohe Zeichendichte nicht erzielbar ist. Des weiteren ist dieser Druckschrift ein kristalldefektfreies Aufbringen der Punktkodierung nicht entnehmbar.

Die grundsätzliche Darstellung von schmalen bzw. breiten Kodierungsstrichen im Zusammenhang mit Binär-Codes ist durch die FR - A 2 184 778 bekannt.

Der Erfindung liegt die Aufgabe zugrunde, ein Verfahren zur Kennzeichnung von Halbleiteroberflächen mit einer durch Laserbeschuß in Softmark-Technik erzeugten Strichkodierung zu schaffen, welches einerseits bei sehr kleiner Zeichenhöhe eine hohe Zeichendichte zuläßt und andererseits mit geringem Aufwand ein sicheres Lesen und Dekodieren der Strichkodierung ermöglicht.

Diese Aufgabe wird bei einem gattungsgemäßen Verfahren durch die kennzeichnenden Merkmale des Anspruchs 1 gelöst.

Der Erfindung liegt die Erkenntnis zugrunde, daß durch eine Reihe sich überlappender Softmark-Schmelzpunkte raupenartige und streulichtintensive Strichelemente gebildet werden können und daß aus derartigen Strichelementen gleicher Breite kristalldefektfreie Strichkodierungen mit schmalen Strichen, schmalen Lücken, breiten Strichen und breiten Lüchen erzeugt werden können. Vorzugsweise werden dabei die breiten Striche

durch m parallele Strichelemente und die schmalen Striche durch n parallkele Strichelemente gebildet, wobei m und n ganze Zahlen sind und m > n ist. Eine besonders einfache Aufbringung der Strichkodierungen und eine äußerst hohe Zeichendichte werden insbesondere dann erzielt, wenn breite Striche der Strichkodierung durch zwei parallele Strichelemente und schmale Striche durch ein Strichelement gebildet werden. Werden die Strichelemente der breiten Striche mit einem geringen Abstand zueinander aufgebracht, so erfolgt eine besonders zuverlässige Detektion der beiden Striche durch Ausmessen des extrem schmalen Abstandes und durch Abzählen der zu diesem Strich gehörenden Strichelemente.

Im Hinblick auf eine möglichst hohe Zeichendichte und eine sichere Detektion der kristalldefekfrei aufgebrachten Strichkodierung hat es sich als besonders vorteilhaft erwiesen, wenn die Strichelemente der breiten Striche mit einem Abstand von weniger als 15 μm zueinander aufgebracht werden, wenn die Strichelemente mit einer Breite von weniger als 15 μm aufgebracht werden und wenn die Strichelemente mit einer Tiefe von weniger als 2 μm aufgebracht werden.

Weiterhin hat es sich im Hinblick auf die Qualität kristalldefektfreier Kennzeichnungen als besonders günstig herausgestellt, wenn die Softmark-Schmelzpunkte mit einem gepulsten Nd-YAG-Laser, insbesondere einem leistungstabilisierten frequenzverdoppelten Nd-YAG-Laser, erzeugt werden.

Ein Ausführungsbeispiel der Erfindung ist in,der Zeichnung dargestellt und wird im folgenden näher beschrieben.

Es zeigen

Fig. 1 einen grundsätzlichen Vergleich zwischen dem bekannten "Code 39" und einer nach dem erfindungsgemäßen Verfahren erzeugten Strichkodierung,

Fig. 2 eine schematische Darstellung einer nach dem erfindungsgemäßen Verfahren auf die polierte Seite einer Halbleiterscheibe aufgebrachten Strichkodierung und

Fig. 3 das Blockschaltbild einer zum Aufbringen der Strichkodierungen geeigneten Beschriftungseinrichtung.

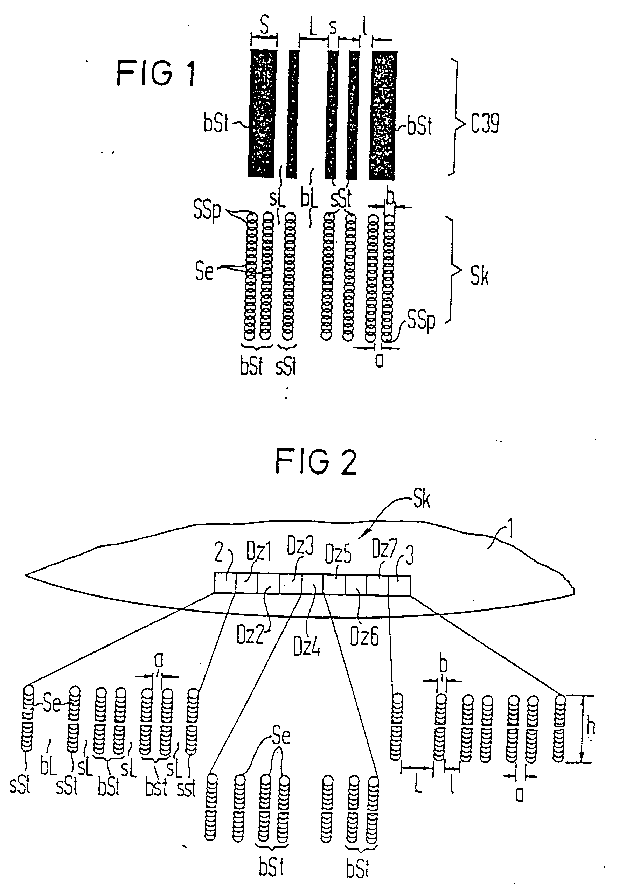

Fig. 1 zeigt im oberen Teil einen Ausschnitt einer üblichen Strichkodierung nach dem mit C 39 bezeichneten "Code 39". Der Ausschnitt umfaßt von links nach rechts gesehen einen breiten Strich bSt der Breite S, eine schmale Lücke sL der Breite 1, einen schmalen Strich sSt der Breite s, eine breite Lücke bL der Breite L, einen schmalen Strich sSt, eine schmale Lücke sL, einen schmalen Strich sSt, eine schmale Lücke sL und einen breiten Strich bSt. Diese Konfiguration entspricht der Ziffer 1.

Im unteren Teil der Fig. 1 ist eine entsprechende Konfiguration aufgezeigt, die durch Laserbeschuß auf die polierte Oberfläche einer Halbleiterscheibe aus Silizium, Germanium oder dergleichen aufgebracht werden kann. Es ist zu erkennen, daß die gesamte Strichkodierung Sk durch einzelne Softmark-Schmelzpunkte SSp gebildet wird, wobei jeweils eine Reihe sich überlappender Softmark-Schmelzpunkte SSp ein Strichelement Se der Breite b bildet. In dem dargestellten Ausführungsbeispiel bildet dann eines dieser Strichelemente Se einen schmalen Strich sSt, während zwei im Abstand a zueinander aufgebrachte Strichelemente Se einen breiten Strich bSt bilden. Der Abstand a ist dabei deutlich geringer als die Breite 1 einer schmalen Lücke sL.

Bei der schematischen Darstellung der Ziffer 1 in Fig. 1 ist jeder Softmark-Schmelzpunkt SSp durch eine vollständige Kreiskontur aufgezeigt. In Wirklichkeit besitzen jedoch nur die jeweils zuletzt aufgebrachten Softmark-Schmelzpunkte SSp eines Strichelementes Se eine derartige vollständige Kreiskontur, während alle anderen Softmark-Schmelzpunkte SSp eine sichelförmige Kontur aufweisen.

Fig. 2 zeigt einen Ausschnitt einer Halbleiterscheibe 1 aus Silizium, bei welcher es sich beispielsweise um einen Wafer für die Herstellung von Megabit-Speichern handelt. Auf die polierte Oberfläche dieser Halbleiterscheibe 1 ist mittels eines Laserstrahls eine Strichkodierung Sk eingeschrieben, die durch gleich breite Strichelemente Se verwirklicht ist. Die Strichelemente Se sind durch Softmark-Schmelzpunkte SSp mit großer Überlappung entstanden und weisen daher eine raupenartige und streulichtintensive Struktur auf. Ein weiterer Vorteil der Softmark-Schmelzpunkte SSp ist, daß nach Erzeugung der Strichkodierung Sk keine mechanischen und/oder chemischen Nachbehandlungen zur Entfernung von Defekten auf der Scheibenoberfläche erforderlich sind.

Auch bei dem in Fig. 2 dargestellten Ausführungsbeispiel basiert die Strichkodierung Sk auf der Codeart "Code 39". Sie besteht aus dem Startzeichen 2, den sieben Datenzeichen Dz1 bis Dz7 und dem Stopzeichen 3. Jedes dieser Datenzeichen Dz1 bis Dz7 bzw. Startzeichen 2 oder Stopzeichen 3 umfaßt jeweils 7 Strichelemente Se mit gleicher Breite b. Die dargestellte Strichkodierung Sk unterscheidet sich von dem "Code 39" dadurch, daß die breiten Striche bSt durch zwei Strichelemente Se realisiert sind, während die schmalen Striche sSt jeweils durch ein Strichelement Se realisiert sind. Die Detektion der breiten Striche bSt erfolgt durch Ausmessen der durch den Abstand a gebildeten extrem schmalen Lücke sowie durch Abzählen der zugehörigen Strichelemente Se.

Alle übrigen Informationsmerkmale der dargestellten Strichkodierung Sk, wie schmale Lücken sL und breiten Lücken bL stimmen mit der Codeart "Code 39" überein.

Das Startzeichen 2, das Datenzeichen Dz4 und das Stopzeichen 3 sind in Fig. 2 vergrößert dargestellt. Es ist zu erkennen, daß die gleich ausgebildeten Start- und Stopzeichen 2 bzw. 3 jeweils von links nach rechts gesehen einen schmalen Strich sSt, eine breite Lücke bL, einen schmalen Strich sSt, eine schmale Lücke sL, einen breiten Strich bSt, eine schmale Lücke sL, einen breiten Strich bSt, eine schmale Lücke sL und einen schmalen Strich sSt umfassen, wobei die drei schmalen Striche sSt jeweils durch eine Strichelement Se und die beiden breiten Striche bSt jeweils durch zwei im Abstand a angeordnete Strichelemente Se gebildet sind. Das Datenzeichen Dz4, das dem Buchstaben "D" entspricht, umfaßt von links nach rechts gesehen einen schmalen Strich sSt, eine schmale Lücke sL, einen schmalen Strich sSt, eine schmale Lücke sl, einen breiten Strich bSt, eine breite Lücke bL, einen schmalen Strich sSt, eine schmale Lücke sL und einen breiten Strich bSt, wobei auch hier wieder die drei schmalen Striche sSt jeweils durch ein Strichelement Se und die beiden breiten Striche bSt jeweils durch zwei im Abstand a zueinander angeordnete Strichelemente Se gebildet sind.

Bei der in Fig. 2 dargestellten Strichkodierung Sk wurden folgende Abmessungen realisiert:

h = 1 mm

b = 10 μm

a = 10 μm

L = 50 μm

l = 20 μm

Mit h ist dabei die Höhe der Strichelemente Se bzw. die Höhe der gesamten Strichkodierung Sk bezeichnet. Mit den angegebenen Abmessungen wurde eine Zeichendichte von 108 Zeichen/Inch erzielt.

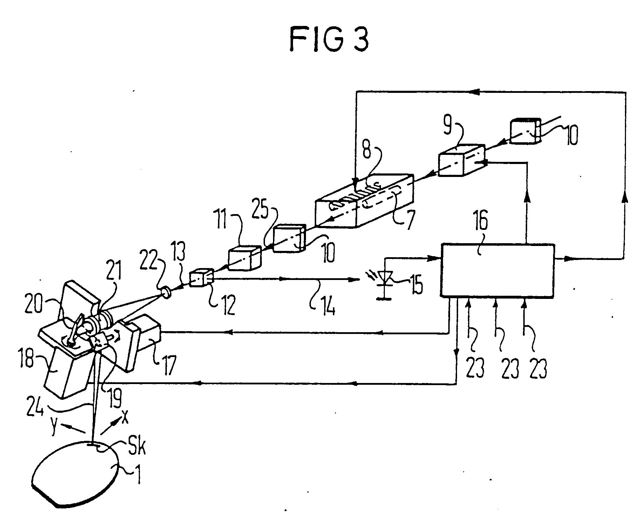

Fig. 3 zeigt das Blockschaltbild einer typischen Beschriftungseinrichtung, wobei die eingesetzte Lasereinheit aus den Komponenten Nd-YAG-Laserstab 7, Pumplichtquelle 8, Q-Switch 9, Resonatorspiegel 10, Frequenzverdoppler 11 und Strahlungsteiler 12 besteht. Für die Fokussierung und Strahlaufweitung sind Linsensysteme 21 bzw. 22 vorgesehen. Die Scaneinheit beinhaltet die Scanspiegel 19, 20 und die Galvanmeterantriebe 17, 18 wobei die ± y-Scaneinrichtung mit Antrieb 17 und die ± x-Scaneinrichtung mit Antrieb 18 realsiert ist. Die zentrale Steuereinheit setzt sich zusammen aus dem Rechnersystem 16 eines Referenzempfängers 15 sowie den Steuereingängen 23 des Rechnersystems 16.

Beim Aufbringen einer Strichkodierung auf eine Halbleiteroberfläche wird durch Steuerung mittels Q-Switch 9 ein Laserpuls 25 abgestrahlt, der nach Passieren des Frequenzverdopplers 11 auf den Strahlungsteiler 12 fällt und in diesem Teiler in den Hauptstrahl 13 sowie in dem Referenzstrahl 14 geteilt wird. Der mit dem Fotoempfänger 15 detektierte Referenzstrahl 14 dient zur Ausgangsleistungsregelung mittels der Pumplichtquelle 8.

Nach Strahlaufweitung mit der Linse 22 und anschließender Fokussierung mit der Linse 21 durchläuft das Strahlenbündel die Scanspiegel 20, 19 und trifft danach als eng gebündelter Laserspot 24 auf die Siliziumscheibe 1. Durch definierte Steuerung des Q-Switch 9, der Galvanometerantriebe 17, 18 und der Pumplichtquelle 8 mittels Rechnersystem 16 wird nun die beispielsweise in Fig. 2 dargestellte Strichkodierung Sk aufgebracht. Dabei wird der Laserstrahl kontinuierlich über die jeweilige während des Beschießens ruhende Halbleiterscheibe geführt. Es ist ohne weiteres auch möglich, die Halbleiterscheibe zum Zwecke des Einbringens der Strichkodierung zu bewegen und den Laser in Ruhe zu belassen oder sowohl den Laser als auch die Halbleiterscheibe abgestimmt zueinander zu bewegen.

Bei der vorstehend beschriebenen Kennzeichnung von Halbleiterscheiben aus einkristallinem Silizium wurde mit dem Q-Switch 9 eine Pulsfrequenz von 9 KHz eingestellt. Bei einer effektiven Laserleistung von ca. 200 mWatt betrug die Scan-Geschwindigkeit ca. 30 mm/s. Dabei ergab sich eine Aufschmelztiefe von etwa 1 μm.

Der Frequenzverdoppler 11 ändert die Wellenlänge des Nd-YAG-Laserstabes 7 von ursprünglich $\lambda$ = 1064 nm in $\lambda$ = 532 nm. Durch diese Frequenzverdopplung ergibt sich eine stärkere Fokussierung des Laserspots 24 und hierdurch eine größere Eindringtiefe mit einer ausgeprägten rampenartigen Struktur der Strichelemente Se (vgl. Fig. 1 und 2).

Eine nach dem erfindungsgemäßen Verfahren hergestellte, lediglich durch leichtes Anschmelzen der entsprechenden Zonen auf der Oberfläche der polierten Halbleiterscheibe gewonnene Softmark-Beschriftung kann beispielsweise die Identifikationsnummer, den Lieferanten der Halbleiterscheibe, die Dotierung, die Kristallorientierung sowie Prüfzeichen usw. umfassen. Die Tiefe der Softmark-Beschriftung liegt dabei zweckmäßigerweise in der Größenordnung von 1 μm.

Das erfindungsgemäße Verfahren ist sinngemäß bei allen Standardcodearten anwendbar, die breite und schmale Striche beinhalten. Die codierte Information eines breiten Striches wird jeweils durch Strichelemente gleicher Breite mit der Anzahl größer 1 gebildet. Winkelversetzte Strichelemente, wie sie bei einer Ringbeschriftung am äußeren Rand der Halbleiterscheibe entstehen, haben im Hinblick auf die geringe Zeichenhöhe und die hohe Zeichendichte ebenfalls Informationscharakter. Bei der Decodierung werden üblicherweise jedoch parallel angeordnete Strichvertiefungen erfaßt.

**Patentansprüche**

1.  Verfahren zur Kennzeichnung von Halbleiterobeflächen mit einer durch Laserbeschuß erzeugten Strichkodierung, wobei sich die Schmelzpunkte der Striche überlappen, dadurch gekennzeichnet, daß breite Striche (bSt) der Strichkodierung (Sk) durch m - parallele Strichelemente (Se) gleicher Breite (b) und schmale Striche (sSt) der Strichkodierung durch n parallele Strichelemente (Se) gleicher Breite (b) in Softmark-Technik erzeugt werden, wobei m und n ganze Zahlen sind und m > n ist, und daß der Laserbeschuß zeitlich derart gesteuert ist, daß beim Aufbringen eines Softmark-Schmelzpunktes (SSp) der zuvor aufgebrachte Softmark-Schmelzpunkt (SSp) zumindest teilweise wieder erstarrt ist.

2.  Verfahren nach Anspruch 1, dadurch gekennzeichnet, daß breite Striche (bSt) der Strichkodierung (Sk) durch zwei parallele Strichelemente (Se) und schmale Striche (sSt) durch ein Strichelement (Se) gebildet werden.

3.  Verfahren nach Anspruch 1 oder 2, dadurch gekennzeichnet, daß die Strichelemente (Se) der breiten Striche (bSt) mit einem geringen Abstand (a) zueinander aufgebracht werden.

4.  Verfahren nach Anspruch 3, dadurch gekennzeichnet, daß die Strichelemente (Se) der breiten Striche (bSt) mit einem Abstand (a) von weniger als 15 µm zueinander aufgebracht werden.

5.  Verfahren nach einem der vorhergehenden Ansprüche, dadurch gekennzeichnet, daß die Strichelemente (Se) mit einer Breite (b) von weniger als 15 µm aufgebracht werden.

6.  Verfahren nach einem der vorhergehenden Ansprüche, dadurch gekennzeichnet, daß die Strichelemente (Se) mit einer Tiefe von weniger als 2 µm aufgebracht werden.

7.  Verfahren nach einem der vorhergehenden Ansprüche, dadurch gekennzeichnet, daß die Softmark-Schmelzpunkte (SSp) mit einem gepulsten Nd-YAG-Laser erzeugt werden.

8.  Verfahren nach Anspruch 8, dadurch gekennzeichnet, daß ein leistungsstabilisierter, frequenzverdoppelter Nd-YAG-Laser verwendet wird.


**Claims**

1.  Method for the identification of semiconductor surfaces by a bar-coding produced by laser bombardment, wherein the melting points of the bars overlap, characterised thereby, that wide bars (bSt) of the bar-coding (Sk) are produced by m parallel bar elements (Se) of equal width (b) and narrow bars (sSt) of the bar-coding are produced by n parallel bar elements (Se) of equal width (b) in soft mark technique, wherein m and n are whole numbers and m is greater than n, and that the laser bombardment is controlled in time in such a manner that, on the application of a soft mark melting point (SSp), the previously applied soft mark melting point (SSp) has at least partially solidified again.

2.  Method according to claim 1, characterised thereby, that wide bars (bSt) of the bar-coding (Sk) are formed by two parallel bar elements (Se) and narrow bars (sSt) are formed by one bar element (Se).

3.  Method according to claim 1 or 2, characterised thereby, that the bar elements (Se) of the wide bars (bSt) are applied one at a small spacing (a) from the other.

4.  Method according to claim 3, characterised thereby, that the bar elements (Se) of the wide bars (bSt) are applied at a spacing (a) of less than 15 micrometres from one another.

5.  Method acording to one of the preceding claims, characterised thereby, that the bar elements (Se) are applied with a width (b) of less than 15 micrometres.

6.  Method according to one of the preceding claims, characterised thereby, that the bar elements (Se) are applied to a depth of less than 2 micrometres.

7. Method according to one of the preceding claims, characterised thereby, that the soft mark melting points (SSp) are produced by a pulsed Nd-YAG laser.

8. Method according to claim 7, characterised thereby, that a power-stabilised, frequency-doubled Nd-YAG laser is used.

**Revendications**

1. Procédé de marquage de surfaces de semi-conducteurs au moyen d'un code à barres produit par bombardement laser, avec chevauchement des points de fusion formant les barres, caractérisé en ce que des barres larges (bSt) du code à barres (Sk) sont produites par m éléments de barre (Se) parallèles de même largeur (b) et des barres étroites (sSt) du code à barres sont produites par n éléments de barre (Se) parallèles de même largeur (b) selon une technique de marquage doux, m et n étant des nombres entiers et $m > n$, et que le bombardement laser est commandé dans le temps de manière que lors de l'application d'un point de fusion (SSp) par marquage doux, le point de fusion (SSp) appliqué précédemment par marquage doux, soit au moins en partie solidifié de nouveau.

2. Procédé selon la revendication 1, caractérisé en ce que des barres larges (bSt) du code à barres (Sk) sont constituées de deux éléments de barre (Se) parallèles et des barres étroites (sSt) sont constituées d'un élément de barre (Se).

3. Procédé selon la revendication 1 ou 2, caractérisé en ce que les éléments de barre (Se) des barres larges (bSt) sont appliqués à une faible distance (a) l'un de l'autre.

4. Procédé selon la revendication 3, caractérisé en ce que les éléments de barre (Se) des barres larges (bSt) sont appliqués à une distance (a) l'un de l'autre qui est inférieure à 15 µm.

5. Procédé selon une des revendications précédentes, caractérisé en ce que les éléments de barre (Se) sont appliqués sous une largeur (b) inférieure à 15 µm.

6. Procédé selon une des revendications précédentes, caractérisé en ce que les éléments de barre (Se) sont appliqués avec une profondeur inférieure à 2 µm.

7. Procédé selon une des revendications précédentes, caractérisé en ce que les points de fusion (SSp) par marquage doux, sont produits au moyen d'un laser Nd-YAG pulsé.

8. Procédé selon la revendication 7, caractérisé en ce que l'on utilise un laser Nd-YAG à puissance stabilisée et à fréquence doublée.

# FIG 1

# FIG 2

# FIG 3